# EUROPÄISCHE PATENTSCHRIFT

(11) **EP 3 405 371 B1**
(45) Veröffentlichungstag und Bekanntmachung des Hinweises auf die Patenterteilung: **30.10.2019**
(21) Anmeldenummer: 17702536.8
(22) Anmeldetag: 18.01.2017
(51) Int. Cl.: B60T 17/00, B60T 17/22

(54) **LUFTVERSORGUNGSANLAGE**
AIR SUPPLY FACILITY
SYSTÈME D'ALIMENTATION EN AIR

(30) Priorität: 21.01.2016 DE 102016100963
(43) Veröffentlichungstag der Anmeldung: 28.11.2018
(73) Patentinhaber: KNORR-BREMSE Systeme für Schienenfahrzeuge GmbH, 80809 München (DE)
(72) Erfinder: BECKER, Christian, 80637 München (DE); SOLO, Damir, 81245 München (DE)
(86) Internationale Anmeldenummer: PCT/EP2017/050927
(87) Internationale Veröffentlichungsnummer: WO 2017/125401

(56) Entgegenhaltungen:
- EP-A2- 0 503 139
- EP-A2- 2 792 882
- WO-A1-03/011435
- WO-A1-2009/092533
- WO-A1-2012/084517
- DE-A1- 19 525 541
- DE-A1-102012 007 028
- DE-B3-102004 051 435
- DE-U1-202008 000 634
- DE-U1-202009 014 775

## Beschreibung

Die vorliegende Erfindung betrifft eine Luftversorgungsanlage, insbesondere eine Luftversorgungsanlage zur Montage auf einem Schienenfahrzeug oder einem Nutzfahrzeug.

Das Einsatzgebiet der vorliegenden Erfindung erstreckt sich vornehmlich auf Schienenfahrzeuge, deren Druckluftversorgungssystem in erster Linie für die Bereitstellung eines Bremsdrucks für die Fahrzeugbremsen dient. Die Luftversorgungsanlage der Erfindung kann aber grundsätzlich bei Nutzfahrzeugen aller Art eingesetzt werden, um dort entsprechende Druckluftsysteme zu unterhalten.

Derartige Luftversorgungsanlagen weisen typischerweise eine Kompressoreinrichtung auf, die Umgebungsluft ansaugt und komprimiert. Bei der Komprimierung der Umgebungsluft erwärmt sich die komprimierte Luft üblicherweise mitsamt der Kompressoreinrichtung stark, weshalb die Kompressoreinrichtung gekühlt werden sollte, um eine Überhitzung zu vermeiden und idealerweise die Drucklufttemperatur am Kompressorausgang möglichst niedrig zu halten. Eine solche Luftversorgungsanlage mit mehreren Kühlkreisläufen zur Kühlung des Antriebsmotors und des Kompressors der Kompressoreinrichtung ist zum Beispiel aus der DE 10 2008 005 436 A1 und der prioritätsgleichen WO 2009/092533 A1 bekannt.

Es besteht Bedarf an einer Luftversorgungsanlage, die auch in rauen Umgebungen, in denen die Umgebungsluft Partikel wie Sand, Staub und/oder Wasser enthält, funktionssicher eingesetzt werden kann. Speziell in Gebieten, in denen mit häufigen Sandstürmen zu rechnen ist, soll die Luftversorgungsanlage einsatzbereit bleiben und funktionieren können. Eine Volleinhausung bzw. Kapselung der Kompressoreinrichtung ist in diesem Zusammenhang sowohl thermisch als auch unter Kosten- und Gewichtsgesichtspunkten nachteilig.

Es ist daher die Aufgabe der vorliegenden Erfindung, eine verbesserte Luftversorgungsanlage zu schaffen, die auch in rauen Umgebungen funktionssicher betrieben werden kann.

Diese Aufgabe wird gelöst durch eine Luftversorgungsanlage mit den Merkmalen des Anspruchs 1. Besonders bevorzugte Weiterbildungen der Erfindung sind Gegenstand der abhängigen Ansprüche.

Die Luftversorgungsanlage der Erfindung, die insbesondere zur Montage auf einem Schienenfahrzeug oder Nutzfahrzeug geeignet ist, weist eine Kompressoreinrichtung zum Erzeugen von Druckluft, die in einer Prozessluftleitung zwischen einem Prozesslufteingang und einem Druckluftausgang angeordnet ist, eine Kühlvorrichtung zum Kühlen der Kompressoreinrichtung und/oder der Prozessluftleitung und eine Gebläsevorrichtung zum Blasen von Kühlluft an die Kühlvorrichtung oder Saugen von Kühlluft durch die Kühlvorrichtung, die in einem Kühlluftkanal zwischen einem Kühllufteingang und einem Kühlluftausgang angeordnet ist, auf. Ferner ist gemäß der Erfindung luftstromauf des Prozesslufteingangs und/oder des Kühllufteingangs ein Sandabscheider zum Abscheiden von Partikeln aus einer durch einen Umgebungslufteingang angesaugten Umgebungsluft angeordnet.

Gemäß der Erfindung wird insbesondere vorgeschlagen, luftstromauf des Prozesslufteingangs und/oder des Kühllufteingangs ein Sandabscheider zum Abscheiden von Partikeln aus der angesaugten Umgebungsluft vorzusehen, sodass nur entsprechend gereinigte Luft über den Prozesslufteingang zur Kompressoreinrichtung bzw. über den Kühllufteingang zur Gebläsevorrichtung gelangt. So kann verhindert werden, dass die Kühlvorrichtung oder in der Prozessluftleitung angeordnete Luftfiltervorrichtungen mit Partikeln wie Sand zugesetzt werden. Mit der erfindungsgemäßen Konstruktion ist dies ohne eine Volleinhausung der Kompressoreinrichtung oder der gesamten Luftversorgungsanlage möglich. Als Ergebnis können Gewicht und Kosten eingespart werden und können erhöhte Temperaturen um die Kompressoreinrichtung vermieden werden.

Die Kompressoreinrichtung weist bevorzugt wenigstens einen Kompressor zum Komprimieren der Prozessluft und wenigstens eine Antriebsvorrichtung zum Antreiben des wenigstens einen Kompressors auf. Der wenigstens eine Kompressor ist vorzugsweise als Schraubenkompressor ausgestaltet, wodurch eine kompakte Bauweise der Kompressoreinrichtung und damit der gesamten Luftversorgungsanlage ermöglicht werden kann. Grundsätzlich sind für die erfindungsgemäße Luftversorgungsanlage aber auch andere Verdichterbauarten denkbar, wie beispielsweise Flügelzellenkompressoren und andere ölgekühlte Kompressoren.

Die Kühlvorrichtung weist bevorzugt wenigstens eine Kühleinrichtung zum Kühlen der Prozessluftleitung, wenigstens eine Kühleinrichtung zum Kühlen eines Kompressors der Kompressoreinrichtung und/oder wenigstens eine Kühleinrichtung zum Kühlen einer Antriebseinrichtung für einen Kompressor der Kompressoreinrichtung auf. Alternativ kann die Kühlvorrichtung auch eine gemeinsame Kühleinrichtung zum Kühlen mehrerer der genannten Komponenten aufweisen. Die Kühlvorrichtung ist vorzugsweise luftstromab des Kühlluftausgangs des Kühlluftkanals angeordnet. Die Kühleinrichtungen können vorzugsweise mit Kühlrippen versehen sein, die von der Gebläsevorrichtung mit Kühlluft angeblasen werden bzw. durch die mittels der Gebläsevorrichtung Kühlluft hindurch gesaugt wird.

Ein Sandabscheider soll in diesem Zusammenhang eine Vorrichtung bezeichnen, die geeignet ist, Partikel wie Sand, Staub, Wasser, etc. aus einem durch die Vorrichtung geleiteten Luftstrom abzuscheiden. Der Sandabscheider ist bevorzugt in einem Umgebungslufteingang der Luftversorgungsanlage angeordnet oder einem solchen Umgebungslufteingang nachgeschaltet. Der Sandabscheider, der auch als Sandfalle bezeichnet werden kann, weist vorzugsweise wenigstens einen Fliehkraftabscheider auf. Fliehkraftabscheider, die für die erfindungsgemäße Luftversorgungsanlage geeignet sind oder an diese angepasst werden können, sind auf dem Markt zum Beispiel von der SGW Werder GmbH & Co. KG, Deutschland, bekannt und erhältlich.

In einer vorteilhaften Ausgestaltung der Erfindung kann der Sandabscheider luftstromauf eines Luftverzweigungsabschnitts angeordnet sein, der luftstromab mit dem Prozesslufteingang und dem Kühllufteingang verbunden ist. Bei dieser Ausgestaltung sind der Prozesslufteingang und der Kühllufteingang über den Sandabscheider mit einem gemeinsamen Umgebungslufteingang gekoppelt.

In einer weiteren vorteilhaften Ausgestaltung der Erfindung kann zwischen der Kompressoreinrichtung und dem Sandabscheider eine Luftfiltervorrichtung vorgesehen sein. Die Luftfiltervorrichtung ist vorzugsweise luftstromab des Prozesslufteingangs angeordnet. Die Luftfiltervorrichtung weist wenigstens einen Luftfilter (z. B. Trockenluftfilter, Feinfilter, etc.) zum Reinigen der Prozessluft vor deren Eintritt in die Kompressoreinrichtung auf.

In einer weiteren vorteilhaften Ausgestaltung der Erfindung kann luftstromab der Kompressoreinrichtung eine Lufttrocknerpatrone zum Entfeuchten und ggf. auch Reinigen der Druckluft angeordnet sein.

In einer weiteren vorteilhaften Ausgestaltung der Erfindung weist die Gebläsevorrichtung wenigstens einen Radiallüfter und/oder wenigstens einen Axiallüfter auf. Der Kühlluftstrom kann aber grundsätzlich durch Lüfter beliebiger Bauart generiert werden. Die Gebläsevorrichtung weist bevorzugt wenigstens einen Lüfter zum Anblasen wenigstens einer Kühleinrichtung der Kühlvorrichtung mit Kühlluft oder Durchsaugen von Kühlluft durch wenigstens eine Kühleinrichtung der Kühlvorrichtung auf. Die Gebläsevorrichtung kann dabei für jede Kühleinrichtung der Kühlvorrichtung einen eigenen Lüfter aufweisen oder für mehrere Kühleinrichtungen der Kühlvorrichtung einen gemeinsamen Lüfter aufweisen.

In einer noch weiteren vorteilhaften Ausgestaltung der Erfindung kann der Sandabscheider von der Gebläsevorrichtung und/oder von der Kompressoreinrichtung schwingungsentkoppelt sein. Zu diesem Zweck kann der Sandabscheider zum Beispiel über einen Faltenbalg mit anderen Komponenten der Luftversorgungsanlage verbunden sein.

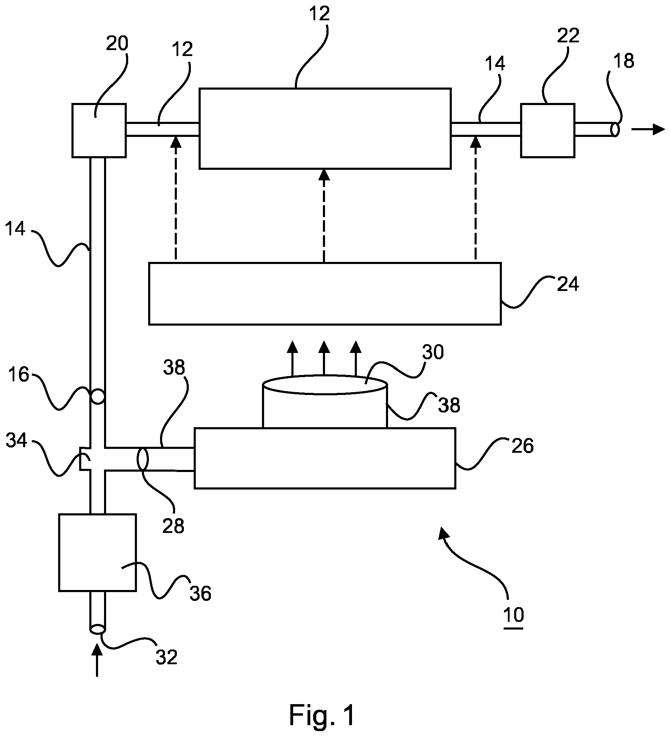

Obige sowie weitere Merkmale und Vorteile der Erfindung werden aus der nachfolgenden Beschreibung eines beispielhaften Ausführungsbeispiels unter Bezugnahme auf die beiliegende Zeichnung besser verständlich. Darin zeigt die einzige Figur 1 in stark vereinfachter Weise den Aufbau einer Luftversorgungsanlage gemäß einem Ausführungsbeispiel der Erfindung.

Fig. 1 zeigt eine Luftversorgungsanlage 10, die zum Beispiel auf dem Dach eines Schienenfahrzeugs oder Nutzfahrzeugs montiert werden kann. Die Luftversorgungsanlage dient zum Beispiel der Versorgung von pneumatischen Einrichtungen (z. B. Bremsen, Luftfedern, etc.) eines Druckluftsystems des Schienen- oder Nutzfahrzeugs mit Druckluft.

Die Luftversorgungsanlage 10 weist eine Kompressoreinrichtung 12 zum Erzeugen von Druckluft auf. Die Kompressoreinrichtung 12 weist vorzugsweise einen Schraubenkompressor zum Komprimieren der Prozessluft und eine Antriebsvorrichtung zum Antreiben des Schraubenkompressors auf. Die Kompressoreinrichtung 12 ist in einer Prozessluftleitung 14 angeordnet. Zwischen einem Prozesslufteingang 16 der Prozessluftleitung 14 und der Kompressoreinrichtung 12 ist vorzugsweise eine Luftfiltervorrichtung 20 zum Reinigen der Prozessluft vorgesehen, die beispielsweise einen Trockenluftfilter, einen Feinfilter oder dergleichen enthält. Zwischen einem Druckluftausgang 18 der Prozessluftleitung 14 und der Kompressoreinrichtung 12 ist vorzugsweise eine Lufttrocknerpatrone 22 zum Entfeuchten und ggf. auch Reinigen der von der Kompressoreinrichtung 12 erzeugten Druckluft vorgesehen.

Die Luftversorgungsanlage 10 weist ferner eine Kühlvorrichtung 24 zum Kühlen der Prozessluftleitung 14 und der Kompressoreinrichtung 12, d. h. vorzugsweise des Schraubenkompressors und seiner Antriebseinrichtung, auf. Die Kühlvorrichtung 24 kann zum Beispiel eine oder mehrere Kühleinrichtungen mit gemeinsamen oder separaten Kühlkreisläufen aufweisen. Die Kühlvorrichtung 24 bzw. ihre Kühleinrichtungen werden von Kühlluft angeblasen. Für eine möglichst große Wärmetauschfläche können die Kühleinrichtungen mit Kühlrippen ausgestaltet sein.

Zum Anblasen der Kühlvorrichtung 24 weist die Luftversorgungsanlage 10 eine Gebläsevorrichtung 26 auf, die einen oder mehrere Lüfter, vorzugsweise Radiallüfter oder Axiallüfter, aufweist. Die Gebläsevorrichtung 26 ist in einem Kühlluftkanal 38 zwischen einem Kühllufteingang 28 und einem Kühlluftausgang 30 angeordnet. Die Kühlvorrichtung 24 ist in diesem Ausführungsbeispiel luftstromab des Kühlluftausgangs 30 angeordnet. D. h. die Gebläsevorrichtung 26 bläst die Kühlluft durch den Kühlluftausgang 30 des Kühlluftkanals 38 an die Kühlvorrichtung 24, von wo aus die Kühlluft dann einfach in die Umgebung entweichen kann. Bei dieser Konstruktion kann auf eine vollständige Einhausung / Kapselung der Kompressoreinrichtung 12 verzichtet werden. In anderen Ausführungsformen der Erfindung kann die Gebläsevorrichtung 26 auch so angeordnet und ausgestaltet sein, dass sie die Kühlluft durch die Kühlvorrichtung 24 hindurch saugt.

Wie in Fig. 1 dargestellt, sind der Prozesslufteingang 16 der Prozessluftleitung 14 und der Kühllufteingang 28 des Kühlluftkanals 38 über einen Luftverzweigungsabschnitt 34 mit einem Umgebungslufteingang 32 verbunden. Die Kompressoreinrichtung 12 und die Gebläsevorrichtung 26 können so Umgebungsluft ansaugen und als Prozessluft bzw. Kühlluft nutzen.

In dem Umgebungslufteingang 32 oder zwischen dem Umgebungslufteingang 32 und dem Luftverzweigungsabschnitt 34 ist ein Sandabscheider 36 zum Abscheiden von Partikeln wie insbesondere Sand, Staub, Wasser, etc. aus der durch den Umgebungslufteingang angesaugten Umgebungsluft angeordnet. Der Sandabscheider 36 ist zum Beispiel über einen Faltenbalg an den Kühllufteingang 28 angebunden, sodass er von der Gebläsevorrichtung 26 schwingungsentkoppelt ist.

Der Sandabscheider 36 weist bevorzugt einen Fliehkraftabscheider auf. Der Fliehkraftabscheider weist beispielsweise mehrere Einströmprofile und mehrere Abscheideprofile, bevorzugt jeweils aus Metall, auf. Die Umgebungsluft wird durch die speziell geformten Einströmprofile umgelenkt und beschleunigt, sodass die darin mitgeführten Partikel der Luft nicht mehr folgen können und in den speziell geformten Abscheideprofilen abgeschieden werden. Der Fliehkraftabscheider ist sehr wartungsarm, da die in ihm abgeschiedenen Partikel vorzugsweise allein durch Schwerkraftwirkung selbsttätig aus diesem entfernt werden. Fliehkraftabscheider dieser Art sind zum Beispiel von der SGW Werder GmbH & Co. KG, Deutschland, bekannt. Der Sandabscheider bzw. sein Fliehkraftabscheider sind dabei so auszugestalten, dass ein möglichst geringer Gegendruck am Luftverzweigungsabschnitt 34 entsteht.

Durch den Einsatz des Sandabscheiders 36 luftstromauf des Prozesslufteingangs 16 und des Kühllufteingangs 28 gelangt nur von Partikeln (möglichst weitgehend) gereinigte Luft zu der Luftfiltervorrichtung 20, der Kompressoreinrichtung 12, der Gebläsevorrichtung 26 und der Kühlvorrichtung 24, sodass sich diese nicht mit Sand oder anderen Partikeln zusetzen, was einen Ausfall der Luftversorgungsanlage 10 zur Folge haben könnte.

Bei der beschriebenen Luftversorgungsanlage 10 ist ein Schutz gegen Partikel nur in dem Umfang und an den Stellen vorgesehen, wie bzw. wo er unbedingt erforderlich erscheint. Auf eine vollständige Einhausung oder Kapselung der Kompressoreinrichtung 12 oder der gesamten Luftversorgungsanlage 10 kann so vorteilhaft verzichtet werden.

### BEZUGSZEICHENLISTE

- 10: Luftversorgungsanlage
- 12: Kompressoreinrichtung
- 14: Prozessluftleitung
- 16: Prozesslufteingang
- 18: Druckluftausgang
- 20: Luftfiltervorrichtung
- 22: Lufttrocknerpatrone
- 24: Kühlvorrichtung
- 26: Gebläsevorrichtung für Kühlvorrichtung
- 28: Kühllufteingang
- 30: Kühlluftausgang
- 32: Umgebungslufteingang
- 34: Luftverzweigungsabschnitt
- 36: Sandabscheider
- 38: Kühlluftkanal

## Patentansprüche

1. Luftversorgungsanlage (10), insbesondere zur Montage auf einem Schienenfahrzeug oder Nutzfahrzeug, aufweisend:
eine Kompressoreinrichtung (12) zum Erzeugen von Druckluft, die in einer Prozessluftleitung (14) zwischen einem Prozesslufteingang (16) und einem Druckluftausgang (18) angeordnet ist;
eine Kühlvorrichtung (24) zum Kühlen der Kompressoreinrichtung (12) und/oder der Prozessluftleitung (14); und
eine Gebläsevorrichtung (26) zum Blasen von Kühlluft an die Kühlvorrichtung (24) oder Saugen von Kühlluft durch die Kühlvorrichtung (24), die in einem Kühlluftkanal (38) zwischen einem Kühllufteingang (28) und einem Kühlluftausgang (30) angeordnet ist,
**dadurch gekennzeichnet, dass**
luftstromauf des Prozesslufteingangs (16) und/oder des Kühllufteingangs (28) ein Sandabscheider (36) zum Abscheiden von Partikeln aus einer durch einen Umgebungslufteingang (32) angesaugten Umgebungsluft angeordnet ist.

2. Luftversorgungsanlage nach Anspruch 1, bei welcher
der Sandabscheider (36) wenigstens einen Fliehkraftabscheider aufweist.

3. Luftversorgungsanlage nach einem der vorhergehenden Ansprüche, bei welcher
der Sandabscheider (26) luftstromauf eines Luftverzweigungsabschnitts (34) angeordnet ist, welcher luftstromab mit dem Prozesslufteingang (16) und dem Kühllufteingang (28) verbunden ist.

4. Luftversorgungsanlage nach einem der vorhergehenden Ansprüche, bei welcher
zwischen der Kompressoreinrichtung (12) und dem Sandabscheider (36) eine Luftfiltervorrichtung (20) vorgesehen ist.

5. Luftversorgungsanlage nach einem der vorhergehenden Ansprüche, bei welcher
die Kompressoreinrichtung (12) wenigstens einen Schraubenkompressor aufweist.

6. Luftversorgungsanlage nach einem der vorhergehenden Ansprüche, bei welcher
die Gebläsevorrichtung (26) wenigstens einen Radiallüfter und/oder wenigstens einen Axiallüfter aufweist.

7. Luftversorgungsanlage nach einem der vorhergehenden Ansprüche, bei welcher
die Kühlvorrichtung (24) luftstromab des Kühlluftausgangs (30) des Kühlluftkanals (38) angeordnet ist.

8. Luftversorgungsanlage nach einem der vorhergehenden Ansprüche, bei welcher
der Sandabscheider (36) von der Gebläsevorrichtung (26) und/oder von der Kompressoreinrichtung (12) schwingungsentkoppelt ist.

## Claims

1. Air supply system (10), in particular for mounting on a rail vehicle or commercial vehicle, having:
a compressor device (12) for generating compressed air, which compressor device (12) is arranged in a process air line (14) between a process air inlet (16) and a compressed air outlet (18);
a cooling apparatus (24) for cooling the compressor device (12) and/or the process air line (14); and
a fan apparatus (26) for blowing cooling air onto the cooling apparatus (24) or drawing cooling air through the cooling apparatus (24), which fan apparatus (26) is arranged in a cooling air duct (38) between a cooling air inlet (28) and a cooling air outlet (30),
**characterised in that**
a grit separator (36) for separating particles from ambient air which is drawn in through an ambient air inlet (32) is arranged in the air flow upstream of the process air inlet (16) and/or the cooling air inlet (28).

2. Air supply system according to claim 1, in which
the grit separator (36) has at least one centrifugal separator.

3. Air supply system according to any of the preceding claims, in which
the grit separator (26) is arranged in the air flow upstream of an air branching section (34) which is connected to the process air inlet (16) and the cooling air inlet (28) downstream in the air flow.

4. Air supply system according to any of the preceding claims, in which
an air filter apparatus (20) is provided between the compressor device (12) and the grit separator (36).

5. Air supply system according to any of the preceding claims, in which
the compressor device (12) has at least one screw compressor.

6. Air supply system according to any of the preceding claims, in which
the fan apparatus (26) has at least one radial fan and/or at least one axial fan.

7. Air supply system according to any of the preceding claims, in which
the cooling apparatus (24) is arranged in the air flow downstream of the cooling air outlet (30) of the cooling air duct (38).

8. Air supply system according to any of the preceding claims, in which
the grit separator (36) is decoupled in terms of vibration from the fan apparatus (26) and/or from the compressor device (12).

## Revendications

1. Système (10) d'alimentation en air à monter notamment sur un véhicule ferroviaire ou sur un véhicule utilitaire, comportant :
un dispositif (12) de compresseur de production d'air comprimé, qui est monté dans un conduit (14) d'air de processus entre une entrée (16) d'air de processus et une sortie (18) d'air comprimé ;
un dispositif (24) de refroidissement pour refroidir le dispositif (12) de compresseur et/ou le conduit (14) d'air de processus ; et
un dispositif (26) de soufflante pour souffler de l'air de refroidissement sur le dispositif (24) de refroidissement ou pour aspirer de l'air de refroidissement dans le dispositif (24) de refroidissement, qui est monté dans un conduit (38) pour de l'air de refroidissement entre une entrée (28) d'air de refroidissement et une sortie (30) d'air de refroidissement
**caractérisé en ce que**
en amont suivant le courant d'air de l'entrée (16) d'air de processus et/ou de l'entrée (28) d'air de refroidissement, est monté un séparateur (36) de sable pour séparer des particules d'un air ambiant aspiré par une entrée (32) d'air ambiant.

2. Système d'alimentation en air suivant la revendication 1, dans lequel
le séparateur (36) de sable a au moins un séparateur par force centrifuge.

3. Système d'alimentation en air suivant l'une des revendications précédentes, dans lequel
le séparateur (26) de sable est monté en amont suivant le courant d'air d'une partie (34) de dérivation de l'air, laquelle communique en aval suivant le courant d'air avec l'entrée (16) d'air de processus et l'entrée (28) d'air de refroidissement.

4. Système d'alimentation en air suivant l'une des revendications précédentes, dans lequel
un dispositif (20) de filtration de l'air est prévu entre le dispositif (12) de compresseur et le séparateur (36) de sable.

5. Système d'alimentation en air suivant l'une des revendications précédentes, dans lequel
le dispositif (12) de compresseur comporte au moins un compresseur à vis.

6. Système d'alimentation en air suivant l'une des revendications précédentes, dans lequel
le dispositif (26) de soufflante comporte au moins un ventilateur radial et/ou au moins un ventilateur axial.

7. Système d'alimentation en air suivant l'une des revendications précédentes, dans lequel
le dispositif (24) de refroidissement est monté en aval suivant le courant d'air de la sortie (30) d'air de refroidissement du conduit (38) pour de l'air de refroidissement.

8. Système d'alimentation en air suivant l'une des revendications précédentes, dans lequel
le séparateur (36) de sable est découplé en oscillation du dispositif (26) de soufflante et/ou du dispositif (12) de compresseur.
